# EUROPEAN PATENT APPLICATION

(11) **EP 2 813 339 A1**
(43) Date of publication of application: **17.12.2014**
(21) Application number: 14157178.6
(22) Date of filing: 28.02.2014
(51) Int. Cl.: B29C 43/18, B29C 45/14, B29C 70/76, B29C 33/00

(54) **Method and mould for a product, and the product**

(30) Priority: 04.03.2013 NL 2010389
(71) Applicant: Voestalpine Polynorm Plastics B.V., 4704 RG Roosendaal (NL)
(72) Inventor: Mandos, Rogier Theodorus Siardus Maria, 4708 KN Roosendaal (NL); De Koning, Martijn Jacobus, 4641 HG Ossendrecht (NL); Van Gilst, Willem François, 4462 PC Goes (NL); Vöge, Frank, 49196 Bad Laer (DE)
(74) Representative: Grootscholten, Johannes A.M.

(57) **Abstract**

The present invention relates to a mould (4) designed to manufacture a product (1) comprising a component (2) and a rim (3) of thermoplastic material fixed to at least a portion of circumference of the component. The mould (4) comprises a first mould part (8) and a second mould part (9) arranged to in use mould the thermoplastic rim material there between and a clamp (10) arranged to in use clamp the component at a circumferential edge thereof, wherein the clamp is arranged at least partially between the first mould part and the second mould part.

Furthermore, the invention relates to a process of manufacturing such a product comprising a component and a rim of thermoplastic material fixed to at least a portion of circumference of the component. Also, the invention relates to a product assembled from a component and a rim of thermoplastic material wherein the rim is moulded to a circumferential edge of the component.

## Description

The present invention relates to a method, a mould and a product, manufactured with the method and the mould.

More in particular, the present invention relates to a mould designed to manufacture a product comprising a component and a rim of thermoplastic material fixed to at least a portion of circumference of the component, the mould comprising:
- a first mould part and a second mould part arranged to in use mould the thermoplastic material there between; and
- a clamp arranged to in use clamp the component at a circumferential edge thereof,
wherein the clamp is arranged at least partially between the first mould part and the second mould part.

From WO-2010/012808 it is known to arrange a plate-like component in a frame or first mould to heat the component and subsequently press the component in a form. Thereafter, the component is taken from the frame or first mould and is arranged in an injection mould. The injection mould is shaped in correspondence with the form of the component, with an additional space at the edge of the component where a rim of injection material is then injection moulded on the rim in the injection mould.

This prior art technology exhibits a number of draw backs. For instance, the transfer from the frame is laborious and time consuming.

Moreover, when the component is in a somewhat plastic state, the material may deform during transfer from the frame to the mould. Although the prior art mould appears to be designed to reshape the component after it has been transferred from the frame to the mould, transfer of the component does not appear to be susceptible to an automated implementation, because of the danger of deformation during the transfer. In any case, the transfer step requires machinery if it can be automated, or manual effort, if it can't. However, the present invention is equally applicable in case of a component made from any other strengthening and/or reinforcing material, such as a plate of aluminium or the like, which would according to the above describe prior art be shaped in a first mould and then be transferred to a second mould for fixing the edge or rim material thereto. Also in such a case, a two step and consequently time consuming process involving two moulds would have to be employed.

GB-488064 is further acknowledged here as the closest prior art and relates to a an apparatus for injection moulding a rim of thermoplastic material onto a component or perform, where the component is in particular a glass cover of or for a dial face, which glass cover is considered to be preformed. Further, the glass cover is considered to be in danger of disintegrating, when subjected to excessive stress, force or pressure, whilst injection moulding is inherently performed at relatively high pressures. As this disclosure relates to preformed glass covers of or for dial faces, requiring separate forming or shaping steps for the glass cover and later the rim, this reference does not provide an answer to the problems related to the above identified prior art reference WO-2010/012808.

The present invention is directed at solving or at least substantially diminishing the problems of the prior art, to which end a mould according to the invention is distinguished by at least the features in the characterising portions of the appended independent claims. Consequently, pressing the component and moulding the rim may be performed sequentially or essentially simultaneously, but in any case inside one mould, without any need for any transfer or transport of any intermediate product, such as the partially completed component in the prior art.

The present invention can exhibit many preferred features, as defined in the appended dependent claims or can encompass other features and/or properties, than those in the dependent claim or described below in relation to the appended drawings.

The mould according to the invention can exhibit the features that the clamp comprises at least one first clamp portion, which is connected with one of the first mould part and the second mould part, and is respectively extendible and/or retractable relative to said one of the first mould part and the second mould part in a direction extending between the first mould part and second mould part, and at least one second clamp portion, which is connected with the other of the first mould part and the second mould part. In such an embodiment, the other of the first mould part and the second mould part may act as a second clamp part, to enable clamping of the edge of the component. Upon engaging the edge of the component with the clamp by extension of the clamp portion, the mould parts may be closed and the clamp part may be retracted, to press mould or injection mould the rim to the edge of the component. In such an embodiment, as an alternative for the other of the first and second mould portions acting as a counter clamp portion, the mould may exhibit the feature that the at least one second clamp portion is respectively extendible and/or retractable relative to said other one of the first mould part and the second mould part in the direction extending between the first mould part and second mould part. In such an embodiment, the clamp portions may close first on the edge of the component, followed by the injection or press mould parts to apply the rim to the edge engaged by the clamp.

In an embodiment having at least one clamp portion, the mould according to the invention may exhibit the feature that at least one of the first clamp portion and the second clamp portion is connected to a relevant one of the first mould part and the second mould part via a length adjustable element from the group at least comprising a cylinder, a spring, and a selectably activated drive. Thus clamping may be actively driven in case of for instance a cylinder or drive, or be more passively effected in case of a spring. In any case, the clamp may be designed to generate a sufficient clamping force to engage the edge of the component with sufficient force in such a manner as to stop thermoplastic material from penetrating into the component beyond the edge thereof as engaged by the clamp.

In a preferred embodiment, the mould according to the invention may exhibit the feature that at least one of the first mould part and the second mould part comprises a first mould portion that is respectively extendible and/or retractable relative to said one of the first mould part and the second mould part in a direction extending between the first mould part and second mould part. Thereby versatility in use may be enhanced, in that mould portions and clamp portions may interchangeably function for clamping the component and/or enclose a space for injection and/or press moulding. In such an embodiment the mould of the invention may further exhibit the feature that the other of the first mould part and the second mould part comprises a second mould portion that is respectively extendible and/or retractable relative to said other one of the first mould part and the second mould part in a direction extending between the first mould part and second mould part. Thus the versatility is completely mirrored in terms of the clamp and the mould parts and portions.

In relation to the mould parts or portions, like the clamp portions, the mould according to the invention may further exhibit the feature that at least one mould portion is connected to a relevant one of the first mould part and the second mould part via a length adjustable element from the group at least comprising a cylinder, a spring, and a selectably activated drive. This provides the same functions and benefits as the embodiment above where clamp portions are more actively or more passively extended and/or retracted.

In a further preferred embodiment the mould according to the present invention may exhibit the feature that the press is formed by at least two of the first clamp portion, the second clamp portion, the first mould portion and the second mould portion, and the press is designed to in use engage the circumferential edge of the component and simultaneously or subsequently act on a surface of the component to three dimensionally deform the component. Thus, in one process, it is further also possible to achieve a three dimensional shape of the component, and augment the invention in relation to the achievable shapes and forms of the resulting products. In such an embodiment, the mould according to the invention may further comprise a heater to heat the component prior to three dimensional deformation by the press. The heater in incorporated in the press. Such an embodiment may be beneficial and elegant in particular for a component of fibrous material with a thermoplastic bonding, to allow deformation thereof after warming, in the press.

As indicated above, the present invention further relates to a process and a resulting product. Such a process can comprise manufacturing a product comprising a component and a rim of thermoplastic rim material fixed to at least a portion of a circumference of the component, the process being performed in a mould comprising a clamp and comprising the steps of: clamping the component in the clamp at a circumferential edge thereof, with the clamp arranged at least partially between or formed by portions or parts of the mould; moulding the thermoplastic rim material between a first mould part and a second mould part of the mould, pressing the component to three dimensionally deform the component, and using the clamp, defining a barrier to stop pressed thermoplastic rim material from passing there through between the mould and the press. The process may further be such that the moulding comprises a step from the group at least comprising injection moulding and press moulding. The process may further be such that the pressing comprises three dimensionally deforming the component in the mould. Also, such a product may be assembled from a component and a rim of thermoplastic rim material, wherein the rim is moulded to a circumferential edge of the component. Preferably the product is such that the component comprises a fibrous material, optionally exhibiting a bonding of for example thermoplastic material, and the rim comprises a thermoplastic material, optionally reinforced with fibres, such as glass fibre reinforced thermoplastic material.

After the preceding general description of the invention in abstract terms and expressions in correspondence with the features of the appended claims, the invention will be further elucidated herein below, referring to the appended drawing, wherein the same or similar elements, portions and parts may be designated using the same reference numbers for distinct embodiments, but where the shown and described embodiments are not to be interpreted as limitations on the scope of protection for the present invention, as such limitations only arise from the invention as defined in the appended claims, and may include additions and/or alternatives not shown or explicitly described herein below. In the drawing:
Fig.'s 1 - 3 show a first embodiment of a press mould according to the present invention, and steps of a process also forming an aspect of the present invention;
Fig. 4 shows a separate heater;
Fig.'s 5 - 7 show a second embodiment of an injection mould according to the present invention, and steps of a process also forming an aspect of the present invention; and
Fig. 8 shows a product resulting from either of the moulds according to figures 1 - 3 and/or 5 - 7.

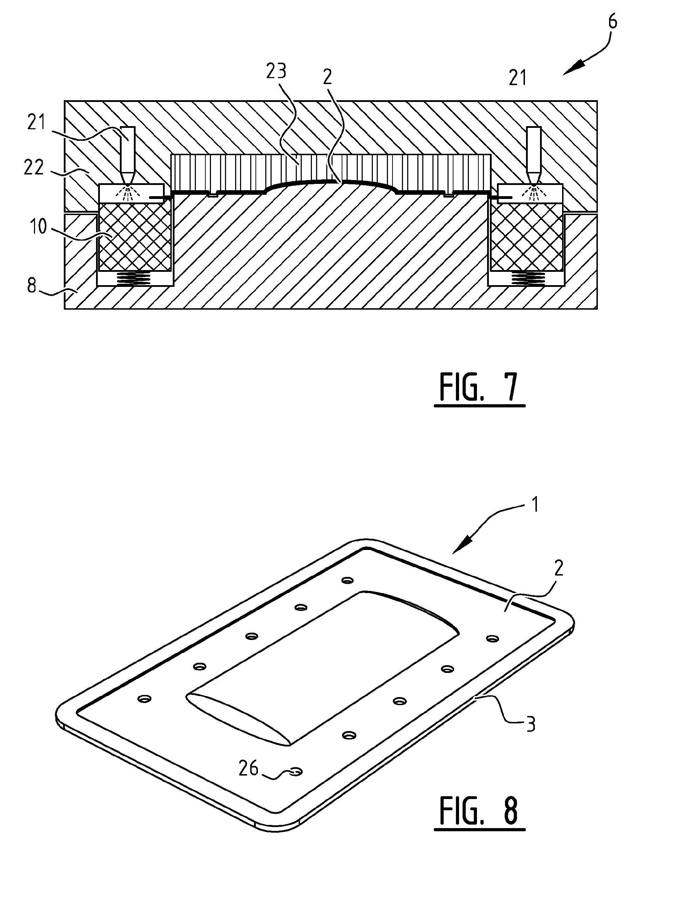

Figure 8 shows a product 1 which may be produced according to a method and with a mould in accordance with aspects of the present invention.

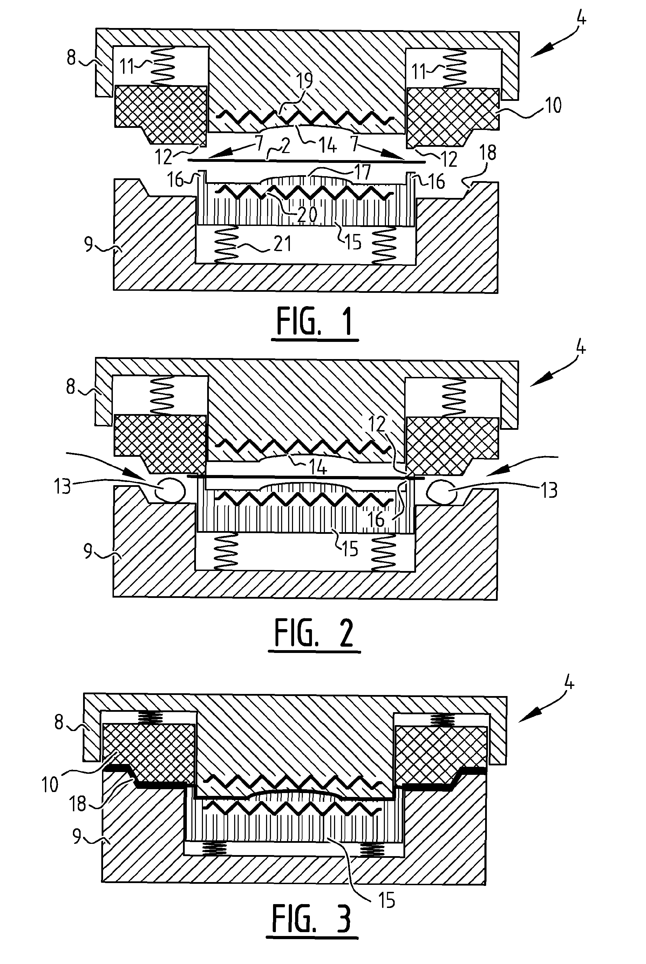

The product 1 comprises a central component 2 of essentially fibrous material, optionally exhibiting a bonding of for example thermoplastic material. Additionally or alternatively, the central component may comprise or even consist of a sheet- or plate like material, for example an aluminium or thin steel sheet. The central component 2 is deformed three dimensionally relative to an originally supplied form, which may be plate-like, as shown in figures 1, 2, 5 and 6. The product 1 further comprises a rim 3, which comprises a thermoplastic material, optionally reinforced with fibres, such as glass fibre reinforced thermoplastic material, for example polypropylene. The rim 3 is arranged on at least a portion of a circumference of the central component 2, though a press or injection moulding process.

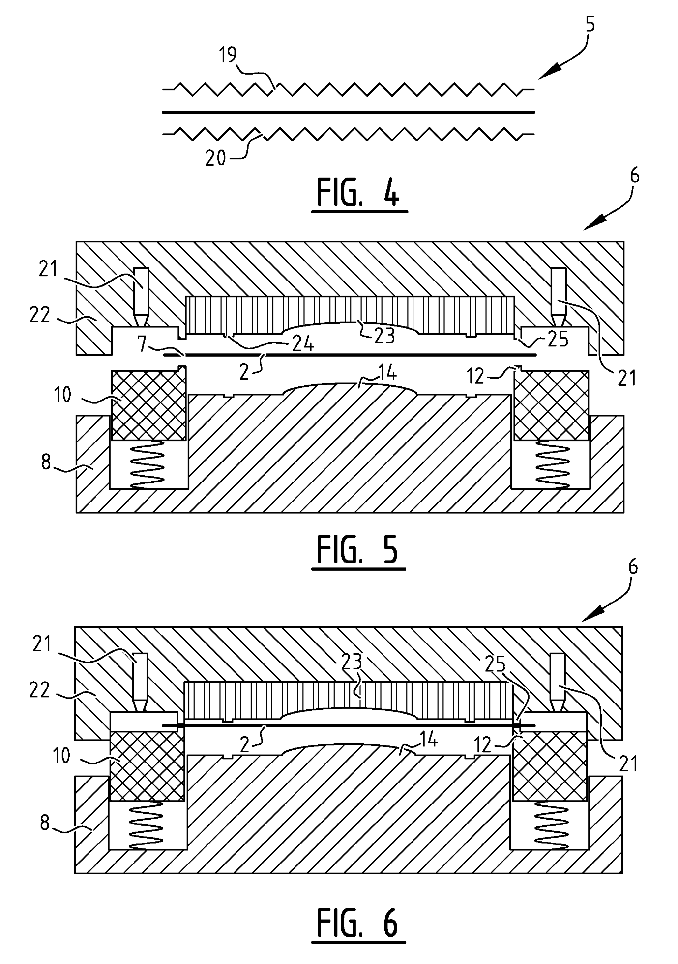

Figures 1 - 3 relate to a press mould 4 in use, depicting three steps of the process. This embodiment includes incorporated heating 5 for the component, of which a schematic representation is shown in figure 4. Figures 5 - 7 relate to an injection mould 6 in use, also depicting three steps of the process.

The press mould 4 is open in figure 1. A plate-like component 2 is introduced into the mould 4. Edge portions 7 of the component are engaged by a clamp, when the press mould 4 is closed, as shown in figure 2. For the sake of simplicity, the mould 4 is shown to have a first basic press mould part 8 and a second basic press mould part 9. The basic press mould parts 8, 9 are movable to close the press mould 4.

The upper press mould part 8 comprises a clamp / mould portion 10, exhibiting a dual function. The clamp / mould portion 10 is extendible / retractable from / to the upper press mould part 8, being connected to the upper press mould part 8 via springs 11. When the upper mould part 8 closes down on the lower mould part 9 (or vice versa) as in figure 2, shoulders 12 on the dual function clamp / mould portion 10 first engage an edge 7 of the plate-like component 2, thus forming an element of a clamp in the sense of the present invention. When the mould parts 8 and 9 are further closed, as depicted in figure 3, the dual function clamp / mould portion 10 defines a space for a pill 13 of possibly pre-heated thermoplastic material to be pressed and dispersed to arrange a rim 3 of thermoplastic material at the edge 7 of the central component 2. A central region 14 of the mould part 8 is stationary relative to the mould part 8 and exhibits a surface curvature. When the mould 4 is closed, as in figure 4, the curvature of region 14 is pressed into the plate like central component 2 for three dimensional deformation thereof, and as such the region 14 of the mould forms an element of a press for deforming the component 2.

A dual function press / clamp portion 15 is extendable / retractable from / to the second mould part 9, is connected through springs 21 therewith, has a ridge 16 coacting with the shoulders 12 of the dual function clamp / mould portion 10 to clamp or engage the edge 7 of the plate like component 2, and a central surface 17 to co-act with the region 14 of the first mould part 8 to press and deform the surfaces of the originally plate like component 2. Adjoining the dual function press / clamp portion 15, the second mould part 9 comprises a counter mould part element 18, co-acting with other parts of the dual function clamp / mould portion 10 than the shoulders 12, to define the moulding space for the pill 13 of thermoplastic material.

Shoulders 12 and ridges 16 define a barrier to stop pressed thermoplastic material of pill 13 from passing there through.

One or both of central region 14 and dual function press / clamp portion 15 may comprise a heating 19, 20. A separate heater 19, 20 may also be provided to pre-heat the (material of the) component 2, as shown also in figure 4, separate from the mould 4.

Figures 5 - 7 show mould 6, which is essentially inverted relative to the mould 4 of figures 1 - 3. The upper first mould part 8 is in mould 6 a lower first mould part, having the dual function clamp / mould portion 10 with shoulders 12. The first mould part 8 of mould 6 differs from that of mould 4 in relation to the shape of the rim 3 to be formed on the edge of the component 2 and an inverted surface 14 resulting in a different curvature of the central component 2. As a further difference, the mould 6 is an injection mould for which nozzles 21 are arranged in the second mould part 22 of mould 6.

In contrast, the second mould part 22 has a stationary insert 23, with aligning or perforating cams 24. It is noted here that such aligning or perforating cams are not considered essential for the invention in the broadest sense thereof, but can constitute a preferred embodiment. Holes 26 in figure 8 may result from these cams 24, if these cams 24 are meant and designed to not only align the mould, but also penetrate through the component 2 as it is shaped or formed. The surface 14 may comprise corresponding accommodations 27 for the cams 24.

When the mould 6 closes, an edge of the component2 is engaged or clamped between shoulders 12 and a ridge 25 on the second mould part 22. When the mould 6 is closed further, the dual function clamp / mould portion 10is retracted into the first mould part 8, whilst the edge 7 of the component 2 remains engaged by the shoulders 12 and ridge 25, to stop thermoplastic material injected in the situation of figure 7 from passing to the component, beyond the edge 7. The press is thus formed by surface 14 and insert 23.

The invention is thus described on the basis of two embodiments, but the invention is by no means to be limited thereto, since the definitions of the claims, and in particular the appended independent claims allow for alternatives and additions relative to the shown and described embodiments.

For instance, dual function elements and components are employed, adding to the elegant and simplified embodiments. In contrast separate elements, components and features per function of clamping, pressing and moulding may be provided and will fall within the scope of protection according to the appended claims, as long as these allow for the clamping in conjunction with moulding.

The component 2 is described above mainly as consisting or comprising a fibrous material, but the central component 2 may equally well be a sheet or plate of aluminium, thin steel and the like, to be three dimensionally shaped and where a rim is pressed or moulded onto (a portion of) the circumferential edge of the central component, all in one closing and opening movement of a mould according to the present invention, which to this effect comprises an incorporated clamp and press or mould for shaping the component and subsequently fix the rim to (a portion) thereof.

## Claims

1. A mould designed to manufacture a product comprising a component and a rim of thermoplastic rim material fixed to at least a portion of a circumference of the component, the mould comprising:
- a first mould part and a second mould part arranged to in use mould the thermoplastic rim material there between; and
- a clamp arranged to in use clamp the component at a circumferential edge thereof,
wherein the clamp is arranged at least partially between the first mould part and the second mould part,
**CHARACTERISED BY**
- a press formed by at least two opposing portions of the clamp and of the mould, the press being designed to in use act on the component to three dimensionally deform the component, and
- the clamp defines a barrier to stop pressed thermoplastic rim material from passing there through between the mould and the press.

2. The mould as claimed in claim 1, wherein the clamp comprises at least one first clamp portion, which is connected with one of the first mould part and the second mould part, and is respectively extendible and/or retractable relative to said one of the first mould part and the second mould part in a direction extending between the first mould part and second mould part, and at least one second clamp portion, which is connected with the other of the first mould part and the second mould part.

3. The mould part according to claim 2, wherein the at least one second clamp portion is respectively extendible and/or retractable relative to said other one of the first mould part and the second mould part in the direction extending between the first mould part and second mould part.

4. The mould according to claim 2 or 3, wherein at least one of the first clamp portion and the second clamp portion is connected to a relevant one of the first mould part and the second mould part via a length adjustable element from the group at least comprising a cylinder, a spring, and a selectably activated drive.

5. The mould according to any one of the preceding claims, wherein at least one of the first mould part and the second mould part comprises a first mould portion that is respectively extendible and/or retractable relative to said one of the first mould part and the second mould part in a direction extending between the first mould part and second mould part.

6. The mould according to claim 5, wherein the other of the first mould part and the second mould part comprises a second mould portion that is respectively extendible and/or retractable relative to said other one of the first mould part and the second mould part in a direction extending between the first mould part and second mould part.

7. The mould according to claim 5 or 6, wherein at least one mould portion is connected to a relevant one of the first mould part and the second mould part via a length adjustable element from the group at least comprising a cylinder, a spring, and a selectably activated drive.

8. The mould according to any one of the preceding claims 2 - 7, wherein the press is formed by at least two of the first clamp portion, the second clamp portion, the first mould portion and the second mould portion, and the press is designed to in use engage the circumferential edge of the component and simultaneously or subsequently act on a surface of the component to three dimensionally deform the component.

9. The mould according to claim 8, further comprising a heater to heat the component prior to three dimensional deformation by the press.

10. The mould according to claim 9, wherein the heater in incorporated in the press.

11. A process of manufacturing a product comprising a component and a rim of thermoplastic rim material fixed to at least a portion of a circumference of the component, the process being performed in a mould comprising a clamp and comprising the steps of:
- clamping the component in the clamp at a circumferential edge thereof, with the clamp arranged at least partially between or formed by portions or parts of the mould;
- moulding the thermoplastic rim material between a first mould part and a second mould part of the mould;
- pressing the component to three dimensionally deform the component, and
- using the clamp, defining a barrier to stop pressed thermoplastic rim material from passing there through between the mould and the press.

12. The process according to claim 11, wherein the moulding comprises a step from the group at least comprising injection moulding and press moulding.

13. The process according to claim 11 or 12, wherein pressing comprises three dimensionally deforming the component in the mould.

14. A product assembled from a component and a rim of thermoplastic rim material wherein the rim is moulded to a circumferential edge of the component.

15. The product according to claim 14, wherein the component comprises at least one material from the group comprising: a fibrous material, optionally exhibiting a bonding of for example thermoplastic material; and a plate like sheet material, such as an aluminium plate, a thin steel sheet or the like, and the rim comprises a thermoplastic material, optionally reinforced with fibres, such as glass fibre reinforced thermoplastic material.
